# EUROPÄISCHE PATENTANMELDUNG

(11) **EP 0 748 706 A2**
(43) Veröffentlichungstag der Anmeldung: **18.12.1996**
(21) Anmeldenummer: 96106940.8
(22) Anmeldetag: 02.05.1996
(51) Int. Cl.: B60C 17/06, B29D 30/04

(54) **Kraftfahrzeug-Luftreifen mit eingelegtem Notlaufstützkörper**

(30) Priorität: 05.05.1995 DE 19516512
(71) Anmelder: Continental Aktiengesellschaft, 30165 Hannover (DE)
(72) Erfinder: Thielemann, Klaus, 31137 Hildesheim (DE); General, Joachim, 30659 Hannover (DE)

(57) **Zusammenfassung**

Verfahren zur Herstellung eines notlauffähigen Fahrzeugrades, bestehend aus einer Felgenhörner und ein Felgenbett aufweisenden Felge und einem luftgefüllten, im wesentlichen aus Gummi oder einem ähnlichen Elastomer bestehenden Fahrzeugreifen. In den Fahrzeugreifen ist ein mit einer Schaumfüllung ausgeschäumter Innenreifen als Notlaufstützkörper eingelegt. Es wird eine einteilige Felge verwendet, in deren Felgenbett ein schlauchförmiger Innenreifen aus Gummi in drucklosem Zustand eingelegt wird. Der Reifen wird über den drucklosen schlauchförmigen Innenreifen hinweg auf die Felge aufgezogen und die Schaumfüllung wird nach der Montage des Reifens in den schlauchförmigen Innenreifen eingefüllt.

## Beschreibung

Die Erfindung betrifft zunächst ein Verfahren zur Herstellung eines notlauffähigen Fahrzeugrades, bestehend aus einer Felgenhörner und ein Felgenbett aufweisenden Felge und einem luftgefüllten, im wesentlichen aus Gummi oder einem ähnlichen Elastomer bestehenden Fahrzeugreifen, in den ein mit einer Schaumfüllung ausgeschäumter Innenreifen als Notlaufstützkörper eingelegt ist.

Ein Kraftfahrzeug bleibt mit platten Reifen normalerweise liegen und kann auch nur noch in ganz begrenztem Umfang weiter gefahren werden, weil die Felgenhörner innerhalb kürzester Zeit die Laufstreifen durchtrennt haben und das Rad keinerlei Traktion mehr hat. Zur Überbrückung einer derartigen Notsituation ist aus der US 4,751,951 ein aus einem Schaumstoff bestehender Notlaufreifen bekannt, der seitlich über eine geteilte, felgenbettfreie Felge in seine Notlaufposition geschoben werden kann und ein Weiterfahren eines Fahrzeuges auch mit zerstörten Reifen ermöglicht. Ein solcher Notlaufreifen muß jedoch gesondert hergestellt werden und erfordert eine für ihn geeignete und gesondert angefertigte Spezialfelge.

Aus der DE-AS 10 26 647 ist es bekannt, einen Innenreifen mit einer elastischen Schaumfüllung zu versehen. Dieser Innenreifen wird nach der Montage des eigentlichen Luftreifens in einer besonders konstruierten Vorrichtung im Schleuderverfahren mit einer Schaumfüllung gefüllt und soll auf einem nadelgelagerten Laufring im Felgenbett laufen. Dies erfordert zur Montage ebenfalls eine aufwendige, geteilte gesondert angefertigte Spezialfelge, die für kein anderes Fahrzeugrad verwendet werden kann. Derartige Sonderanfertigungen sind ist sehr material- und kostenaufwendig und aufgrunf ihrer relativ geringen Stückzahlen wirtschaftlich irrelevant.

Aufgabe der vorliegenden Erfindung ist es, ein Verfahren der eingangs beschriebenen Art zu schaffen mit dem aufwendige Vorrichtungen und kostenintensive Montagearbeiten vermieden werden können und nach dem ein Fahrzeugrad mit geringem Aufwand notlauffähig ausgerustet werden kann.

Gelöst wird diese Aufgabe dadurch, daß eine einteilige Felge verwendet wird, ein schlauchförmiger Innenreifen aus Gummi in drucklosem Zustand in das Felgenbett eingelegt wird, der Reifen über den drucklosen schlauchförmigen Innenreifen hinweg auf die Felge aufgezogen wird und die Schaumfüllung nach der Montage des Reifens in den schlauchförmigen Innenreifen eingefüllt wird.

Bei einer anderen Ausführung ist es vorgesehen, daß der schlauchförmige Innenreifen im Bereich der Reifenwulste an die Reifeninnenwandung anvulkanisiert wird. Bei einer weiteren Ausführung ist es, daR der Notlaufstützkörper halbschlauchförmig ausgebildet ist und die Schaumfüllung nach der Montage des Reifens zwischen Felge und Innenreifen eingefüllt wird.

Eine weitere Aufgabe besteht darin, einen nach dem vorstehenden Verfahren hergestellbaren notlauffähigen Fahrzeugreifen zu schaffen.

Gelöst wird diese Aufgabe dadurch, daß die Felge einteilig ist und ein Felgenbett aufweist, ein schlauchförmiger Innenreifen aus Gummi in drucklosem Zustand in das Felgenbett eingelegt ist und die Schaumfüllung nach der Montage des Reifens in den schlauchförmigen Innenreifen eingefüllt ist. Dabei ist es vorgesehen, daß der schlauchförmige Innenreifen über die Felgenhörner dehnbar ist.

Bei einer anderen Ausführung ist vorgesehen, daß der Innenreifen halbschlauchförmig ausgebildet und im Bereich der Reifenwulste an die Innenwandung des Reifens anvulkanisiert ist. Zum Einfüllen der Druckluft ist es möglich, den Reifen über einen durch die Schaumfüllung der schlauchförmigen Innenreifens geführten Ventilschlauch zu beaufschlagen.

Durch diese Maßnahmen wird ein Fahrzeugrad geschaffen, bei dem herkömmliche, insbesondere einteilige Tiefbettfelgen, für notlauffähige Innenreifen mitbenutzt werden können. Der Notlauf-Innenreifen wird zur Montage in das Tiefbett eingelegt und der Reifen kann drüber hinweg in die Felgenhörner eingezogen werden. Erst nach der Montage des Reifens auf die Felge wird der Innenreifen ausgeschäumt und das Fahrzeugrad ist notlauffähig. Ist ein derartiger Reifen abgefahren und soll er gewechselt werden, so kann er von der Felge abgetrennt werden. Ebenso kann verfahren werden, wenn der Reifen zerstört worden ist.

Weitere vorteilhafte Maßnahmen sind in den übrigen Unteransprüchen beschrieben. Die Erfindung ist anhand eines Ausführungsbeispieles in der beiliegenden Zeichnung dargestellt und wird nachfolgend näher beschrieben; es zeigt:
- **Figur 1**: die Darstellung einer Felge anhand ihres schematischen Felgenprofils eines Fahrzeugrades;
- **Figur 2**: die schematische Darstellung eines Fahrzeugrades, mit einer Felge mit symmetrischem Felgenprofil, mit einem Felgentiefbett und einem angedeutet aufgezogenen Fahrzeugreifen;
- **Figur 3**: ein Fahrzeugrad nach der Figur 2, mit ausgeschäumtem, schlauchförmigen Innenreifen;
- **Figur 4**: ein Fahrzeugrad nach den Figuren 2 und 3, mit einem halbschlauchförmigen Innenreifen, der im Bereich der Reifenwulste an die Reifeninnenwandung des Reifen anvulkanisiert ist, mit asymmetrischer Felge;
- **Figur 5**: ein Fahrzeugrad nach der Figur 4, mit einem halbschlauchförmigen Innenreifen mit Doppelwandung, der im Bereich der Reifenwulste an die Reifeninnenwandung anvulkanisiert ist, ohne Schaumfüllung.

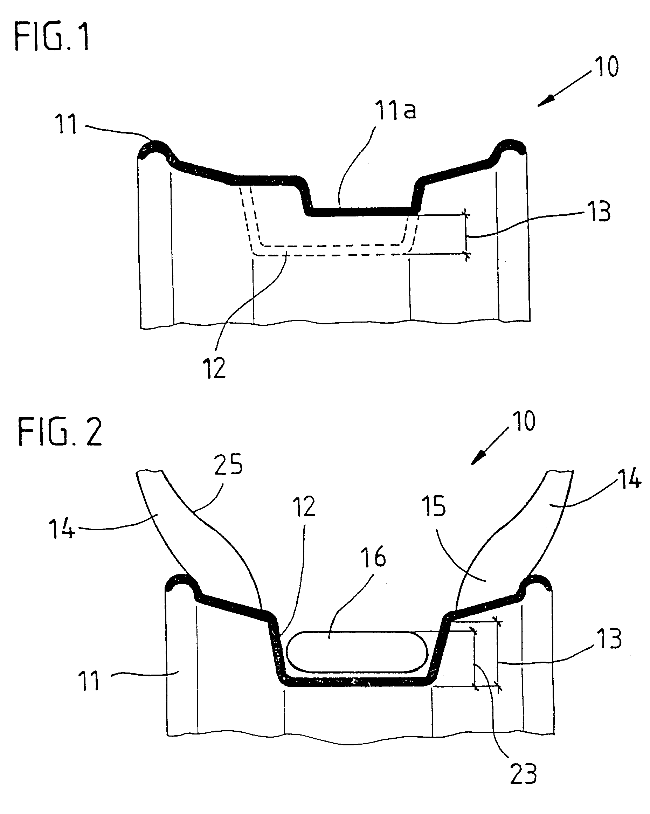

In der Figur 1 ist eine einteilige Felge 11 eines Fahrzeugrades 10 mit einem asymmetrischen Felgenbett 11a dargestellt. Strichliert ist ein symmetrisches Felgentiefbett 12 dargestellt, dessen Vertiefung 13 tiefer als das asymmetrische Felgenbett 11a ausgebildet ist. Auf die Felge 11 kann ein in den nachfolgenden Figuren dargestellter Reifen 14 aufgezogen werden.

Vor der Montage des Reifens 14 kann ein schlauchförmiger Innenreifen 16 im drucklosen Zustand in die Vertiefung 13 des Felgentiefbettes 12 eingelegt werden, wie dies die Figur 2 zeigt. Zur Montage wird der Innenreifen 16, der hier als geschlossener Schlauch ausgebildet ist, gedehnt und über eines der Felgenhörner 19 der Felge 11 gezogen. Dazu besteht er aus dehnbarem Gummi oder einem anderen geeigneten Elastomer.

Zur Montage eines Reifens 14 können dessen Reifenwulste 15 über den drucklosen Innenreifen 16 hinweg auf die Felge 11 aufgezogen werden. Die Höhe 23 des drucklosen Innenreifens 16 ist dabei kleiner als die Vertiefung 13 des Felgentiefbettes 12, maximal ist sie gleich groß.

Nach der Montage des Reifens 14 auf die Felge 11 wird der schlauchförmige Innenreifen 16 mit einer Schaumfüllung 17 aufgeschäumt. Dadurch entsteht ein Fahrzeugrad 10, in dessen Reifeninnenraum 24 für den Notlaufbetrieb ein elastischer, tragfähiger Stützkörper in Form der Schaumfüllung 17 angeordnet ist. Die Schaumfüllung soll dabei weitgehend thermisch stabil sein und bei Erwärmung möglichst keine größer werdende Nachgiebigkeit aufweisen und ihre Form und Stabilität beibehalten..

Im Normalbetrieb kann der Reifen 14 einfedern, ohne dabei die Lauffläche 20 des schlauchförmigen Innenreifens 16 zu berühren. Die Schaumfüllung 17 soll eine Tragfähigkeit aufweisen, die ausreichend groß ist, um das Fahrzeug bei Druckverlust oder Zerstörung des Reifens 14 noch fahrfähig zu halten.

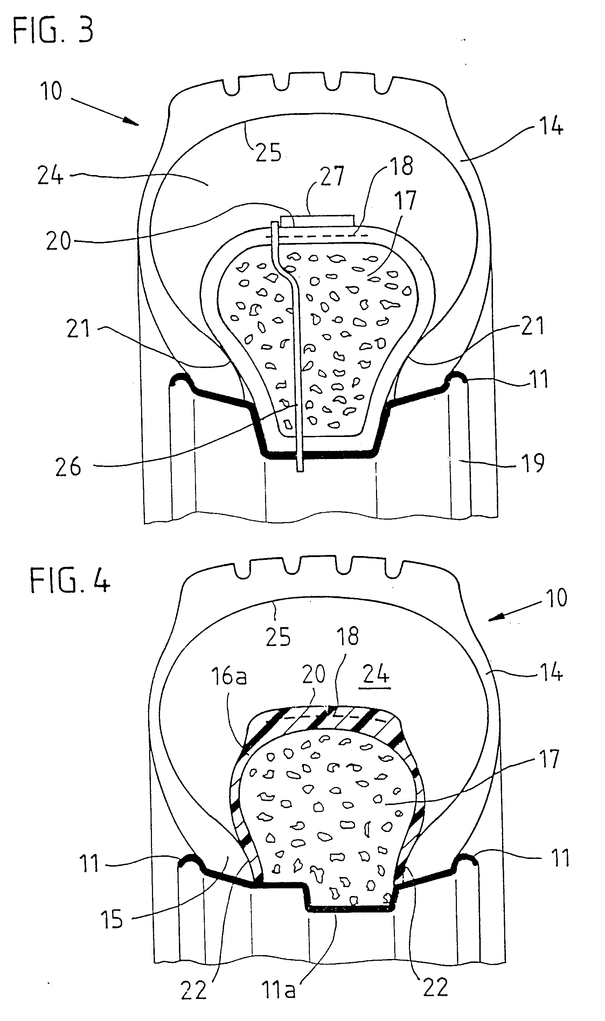

Wie die Figuren 3 und 4 zeigen, kann der schlauchförmige Innenreifen 16 ist im Bereich seiner Lauffläche 20 mit einem Festigkeitsträger 18 in Form üblicher Gewebeeinlagen versehen. Dieser Festigkeitsträger 18 weist dabei eine Umfangslänge auf, die größer als die Umfangslänge eines Felgenhornes 19 ist.

Der schlauchförmige Innenreifen 16 ist im ausgeschäumtem Zustand so bemessen, daß er im Bereich der Reifenwulste 15 mit seitlichen Wulstabstützungen 21 an der Innenwandung 25 des Reifens 14 anliegt. Der Reifen 14 wird dadurch auch im beschädigten Zustand sicher auf der Felge 11 gehalten.

Bei der Ausführung nach der Figur 4 wird eine Felge 11 mit einem asymmetrischen Felgenbett 11a verwendet. Als Notlaufabstützung ist ein halbschlauchförmiger Innenreifen 16a vorgesehen, der im Bereich der Reifenwulste 15 mit Vulkanisationen 22 an die Reifeninnenwandung 25 anvulkanisiert ist.

Der halbschlauchförmige Innenreifen 16a ist zunächst nicht ausgeschäumt. Zur Montage kann dadurch der halbschlauchförmige Innenreifen 16a in den Reifeninnenraum 24 eingestülpt und Reifen 14 über eines der Felgenhörner 19 der Felge 11 gezogen werden.

Nachdem der Reifen 14 auf der Felge 11 montiert ist, wird die Schaumfüllung 17 zwischen den halbschlauchförmigen Innenreifen 16a und die Felge 11 geschäumt. Die radial äußere Lauffläche 20 des schlauchförmigen Innenreifens 16a kann dabei mit einem Festigkeitsträger 18 versehen. Zur Demontage wird ein derartiger Reifen 14 von der Felge 11 geschnitten, da er dann ohnehin zerstört ist.

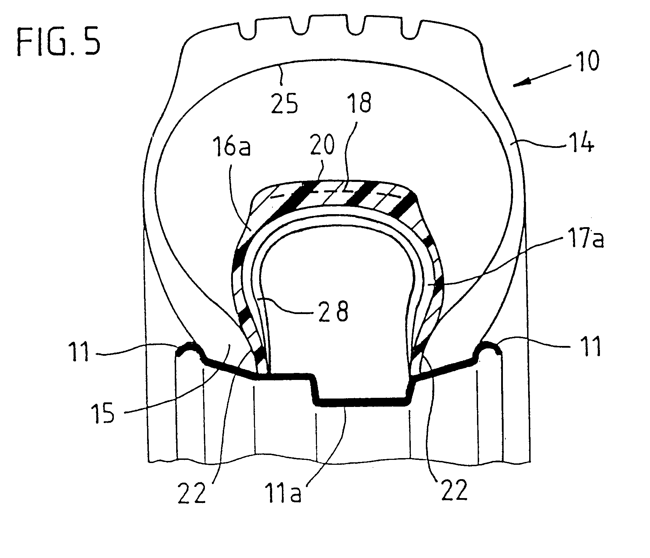

Bei der in der Figur 5 dargestellten Ausführung, ist der halbschlauchförmige Innenreifen 16a mit einer Doppelwandung 28 versehen. Bei dieser Ausführung wird die Schaumfüllung 17 in den Zwischenraum 17a zwischen dem halbschlauchförmigen Innenreifen 16a und der Doppelwandung 28 eingeschäumt. Dadurch wird ein Kontakt mit der Felge 11 und eine mögliche Anhaftung vermieden. Die Schaumfüllung 17 ist tragfähig und stabilisiert die Reifenwulste 15 in ihrer vorgesehenen Position auf der Felge 11.

Um die Notlaufeigenschaften zu verbessern, ist in den Reifeninnenraum 24 ein Schmiermittel eingebracht. Vorzugsweise wird es vor der Montage des Reifens 14 auf die Lauffläche 20 des Innenreifen 16 bzw. 16a aufgestrichen. Dadurch soll die Reibung zwischen der Reifeninnenwandung 25 und dem Innenreifen 16 bzw. 16a verringert werden.

Das Schmiermittel kann dabei auch in einem Schmiermittelcontainer 27 bereitgestellt sein, wie er in der Figur 3 schematisch dargestellt ist. Dieser Schmiermittelcontainer 27 wird bei einer Beschädigung des Reifens 14, bei der dieser seinen tragenden Luftdruck verliert, zerstört, und das Schmiermittel wird freigesetzt.

Um den Reifen 14 mit dem zu seinem Betrieb erforderliche Luftdruck zu versehen, ist durch die Schaumfüllung 17 und den Innenreifen 16 bzw. 16a ein Ventilschlauch 26 geführt. Dieser Ventilschlauch 26 ist flexibel und kann möglichen Relativbewegungen zwischen Reifen 14 und Innenreifen 16 bzw. 16a folgen.

Die Höhe des Innenreifens 16 bzw. 16a weist in ausgeschäumtem Zustand etwas 50-70% der Querschnittshöhe des Reifens 14 auf. Dadurch ist im Betrieb des Fahrzeugrades 10 mit intaktem Reifen 14 stets eine ausreichend große Einfederung möglich.

### Bezugszeichen

- 10: Fahrzeugrad
- 11: Felge
- 11a: asymmetrisches Felgenbett
- 12: Felgentiefbett
- 13: Vertiefung
- 14: Reifen
- 15: Reifenwulst
- 16: schlauchförmiger Innenreifen
- 16a: halbschlauchförmiger Innenreifen
- 17: Schaumfüllung
- 17a: Zwischenraum
- 18: äußerer Festigkeitsträger
- 19: Felgenhorn
- 20: Lauffläche
- 21: Wulstabstützung
- 22: Vulkanisation
- 23: Schlauchhöhe
- 24: Reifeninnenraum
- 25: Reifeninnenwandung
- 26: Ventilschlauch
- 27: Schmiermittelcontainer
- 28: Doppelwandung

## Patentansprüche

1. Verfahren zur Herstellung eines notlauffähigen Fahrzeugrades, bestehend aus einer Felgenhörner und ein Felgenbett aufweisenden Felge und einem luftgefüllten, im wesentlichen aus Gummi oder einem ähnlichen Elastomer bestehenden Fahrzeugreifen, in den ein mit einer Schaumfüllung ausgeschäumter Innenreifen als Notlaufstützkörper eingelegt ist, dadurch gekennzeichnet, daß eine einteilige Felge verwendet wird, ein schlauchförmiger Innenreifen aus Gummi in drucklosem Zustand in das Felgenbett eingelegt wird, der Reifen über den drucklosen schlauchförmigen Innenreifen hinweg auf die Felge aufgezogen wird und die Schaumfüllung nach der Montage des Reifens in den schlauchförmigen Innenreifen eingefüllt wird.

2. Verfahren zur Herstellung eines notlauffähigen Fahrzeugrades nach Anspruch 1, dadurch gekennzeichnet, daß eine einteilige Felge mit einem symmetrischen Tiefbett verwendet wird, der schlauchförmige Innenreifen gedehnt und über die Felgenhörner zogen und in das Felgenbett eingelegt wird.

3. Verfahren zur Herstellung eines notlauffähigen Fahrzeugrades nach Anspruch 1, dadurch gekennzeichnet, daß eine einteilige, asymmetrische Flachbettfelge verwendet wird.

4. Verfahren zur Herstellung eines notlauffähigen Fahrzeugrades nach den Ansprüchen 1 bis 3, dadurch gekennzeichnet, daß als schlauchförmiger Innenreifen dehnbares Gummimaterial verwendet wird.

5. Verfahren zur Herstellung eines notlauffähigen Fahrzeugrades nach einem der Ansprüche 1 bis 4, dadurch gekennzeichnet, daß der Gummischlauch im Bereich der Reifenwulste an die Reifeninnenwandung anvulkanisiert wird.

6. Verfahren zur Herstellung eines notlauffähigen Fahrzeugrades nach einem der Ansprüche 1 bis 5, dadurch gekennzeichnet, daß der Notlaufstützkörper Innenreifen halbschlauchförmig ausgebildet ist und die Schaumfüllung nach der Montage des Reifens zwischen Felge und Innenreifen eingefüllt wird.

7. Verfahren zur Herstellung eines notlauffähigen Fahrzeugrades nach einem der Ansprüche 1 bis 6, dadurch gekennzeichnet, daß der Notlaufstützkörper doppelwandig halbschlauchförmig ausgebildet ist und die Schaumfüllung nach der Montage des Reifens zwischen die Doppelwandung und den Innenreifen eingefüllt wird.

8. Verfahren zur Herstellung eines notlauffähigen Fahrzeugrades nach den Ansprüchen 1 bis 7, dadurch gekennzeichnet, daß der Innenreifen auf seiner der Reifeninnenwandung zugewandten Oberfläche mit einem Schmiermittel behandelt wird.

9. Verfahren zur Herstellung eines notlauffähigen Fahrzeugrades nach einem der Ansprüche 1 bis 8, dadurch gekennzeichnet, daß in den Innenreifen eine temperaturbeständige Schaumfüllung gefüllt wird.

10. Notlauffähiges Fahrzeugrad, bestehend aus einer Felge und einem luftgefüllten, im wesentlichen aus Gummi oder einem ähnlichen Elastomer bestehenden Fahrzeugreifen, in den ein Notlaufstützkörper eingelegt ist, der mit einer Schaumfüllung ausgeschäumt ist, dadurch gekennzeichnet, daß die Felge (11) einteilig ist und ein Felgenbett (11a, 12) aufweist, ein schlauchförmiger Innenreifen (16, 16a) aus Gummi in drucklosem Zustand in das Felgenbett (11a, 12) eingelegt ist und die Schaumfüllung (18) nach der Montage des Reifens (14) in den schlauchförmigen Innenreifen (16, 16a) eingefüllt ist.

11. Notlauffähiges Fahrzeugrad nach Anspruch 10, dadurch gekennzeichnet, daß der schlauchförmige Innenreifen (16) über die Felgenhörner (19) dehnbar ist.

12. Notlauffähiges Fahrzeugrad nach Anspruch 10, dadurch gekennzeichnet, daß der schlauchförmige Innenreifen (16, 16a) radial außen mit einer Festigkeitseinlage (18) versehen ist.

13. Notlauffähiges Fahrzeugrad nach den Ansprüchen 10 bis 12, dadurch gekennzeichnet, daß der Innenreifen (16, 16a) in ausgeschäumtem Zustand etwas 50-70% der Reifenquerschnittshöhe aufweist.

14. Notlauffähiges Fahrzeugrad nach den Ansprüchen 10 bis 13, dadurch gekennzeichnet, daß das Felgenbett (12) tiefer als die radiale Erstreckung des schlauchförmigen Innenreifen (16) in drucklosem Zustand ist.

15. Notlauffähiges Fahrzeugrad nach Anspruch 10, dadurch gekennzeichnet, daß der Innenreifen (16a) halbschlauchförmig ausgebildet und im Bereich der Reifenwulste (15) an die Innenwandung (25) des Reifens (14) anvulkanisiert ist.

16. Notlauffähiges Fahrzeugrad nach Anspruch 15, dadurch gekennzeichnet, daß der halbschlauchförmige Innenreifen (16a) mit einer Doppelwandung (28) versehen ist.

17. Notlauffähiges Fahrzeugrad nach einem der Ansprüche 10 bis 16, dadurch gekennzeichnet, daß der Reifen (14) über einen durch die Schaumfüllung (17) der schlauchförmigen Innenreifens (16, 16a) geführten Ventilschlauch (26) mit Luftdruck beaufschlagbar ist.

18. Notlauffähiges Fahrzeugrad nach einem der Ansprüche 10 bis 17, dadurch gekennzeichnet, daß in den Reifen (14) ein Schmiermittel eingefüllt ist.

19. Notlauffähiges Fahrzeugrad nach einem der Ansprüche 10 bis 18, dadurch gekennzeichnet, daß in den Reifen (14) zwischen Reifeninnenwandung (25) und Innenreifen (16, 16a) ein Schmiermittel eingefüllt ist.

20. Notlauffähiges Fahrzeugrad nach Anspruche 19, dadurch gekennzeichnet, daß in dem Reifen (14) ein mit Schmiermittel gefüllter Container (27) vorgesehen ist.
